# EUROPÄISCHE PATENTSCHRIFT

(11) **EP 3 821 521 B1**
(45) Veröffentlichungstag und Bekanntmachung des Hinweises auf die Patenterteilung: **07.01.2026**
(21) Anmeldenummer: 19778862.3
(22) Anmeldetag: 17.09.2019
(51) Int. Cl.: H02K 15/023, H02K 17/16

(54) **VERFAHREN ZUR HERSTELLUNG EINES ROTORS FÜR EINE ELEKTRISCHE ROTIERENDE MASCHINE**
METHOD FOR THE PREPARATION OF A ROTOR OF A ROTARY ELECTRIC MACHINE
PROCÉDÉ DE FABRICATION D'UN ROTOR POUR UNE MACHINE À ROTATION ÉLECTRIQUE

(30) Priorität: 28.09.2018 EP 18197407
(43) Veröffentlichungstag der Anmeldung: 19.05.2021
(73) Patentinhaber: Innomotics GmbH, 90441 Nürnberg (DE)
(72) Erfinder: KÜMMLEE, Horst, 13505 Berlin (DE); SEIBICKE, Frank, 14822 Borkheide (DE)
(74) Vertreter: Michalski Hüttermann & Partner Patentanwälte mbB
(86) Internationale Anmeldenummer: PCT/EP2019/074803
(87) Internationale Veröffentlichungsnummer: WO 2020/064413

(56) Entgegenhaltungen:
- EP-A1- 0 264 110
- EP-A1- 2 592 730
- WO-A1-2016/017256
- DE-A1- 102005 056 823
- DE-A1- 102009 053 987
- JP-A- 2014 108 006
- US-A1- 2004 202 797

## Beschreibung

Die Erfindung betrifft ein Verfahren zur Herstellung eines Rotors für eine elektrische rotierende Maschine.

Die Erfindung betrifft ferner einen Rotor für eine elektrische rotierende Maschine, welcher mit einem derartigen Verfahren hergestellt ist.

Die Erfindung betrifft darüber hinaus eine elektrische rotierende Maschine mit mindestens einem derartigen Rotor.

Ein derartiges Verfahren wird insbesondere zur Herstellung von Rotoren schnell drehender elektrischer rotierender Maschine eingesetzt, welche beispielsweise als Asynchronmaschinen ausgeführt sind. Beispielsweise ist eine derartige schnell drehende elektrische rotierende Maschine mit einer Leistung von mindestens 1 Megawatt und einer Drehzahl von mindestens 5000 U/min betreibbar, die Erfindung ist jedoch nicht auf derartige Maschinen beschränkt. Eine schnell drehende elektrische rotierende Maschine ist als Motors oder als Generator, beispielsweise in einem Kompressor oder einer Turbine, betreibbar.

Der Rotor weist mindestens ein magnetpolerzeugendes Element, beispielsweise einen Kurzschlusskäfig, eine Wicklung oder Permanentmagnete, den bei hohen Drehzahlen auftretenden Fliehkräften standhalten müssen.

Die Offenlegungsschrift EP 2 979 349 A1 beschreibt ein Verfahren zur Herstellung eines Rotors einer elektrischen Maschine, wobei der Rotor einen konzentrisch zur Rotorachse angeordneten Rotorkern aus einem Kernmaterial aufweist, wobei der Rotorkern Nuten aufweist, welche im Wesentlichen in axialer Richtung verlaufen, wobei der Rotorkern am jeweiligen axialen Ende der Nuten jeweils eine ringförmige, konzentrisch zur Rotorachse angeordnete Aussparung aufweist, welche die Nuten verbindet, wobei der Rotorkern eine Diffusionsschicht aufweist, welche ein Diffusionsmaterial umfasst und welche zumindest die jeweilige Oberfläche der Nuten und/oder der jeweiligen ringförmigen Aussparung zumindest teilweise bedeckt.

Die Patentschrift EP 2 979 350 B1 beschreibt ein Verfahren zur Herstellung eines Rotors einer elektrischen Asynchronmaschine. Bei dem Verfahren wird eine Trägerwelle mit Wellennuten hergestellt. Auf die Trägerwelle wird ein Kurzschlussläufer aufgebracht, wobei die Trägerwelle und ein elektrisch leitfähiges Schüttgut in einen Behälter eingebracht werden, so dass das Schüttgut die Wellennuten ausfüllt. Das Schüttgut wird in dem Behälter durch Heiß Isostatisches Pressen verdichtet und mit der Trägerwelle verbunden.

Die Offenlegungsschrift EP 3 040 384 A1 beschreibt eine Rotorwelle für einen Hochgeschwindigkeitsmotor, wobei die Rotorwelle einen Wellenkörper, der für eine Drehbewegung während des Betriebs des Hochgeschwindigkeitsmotors ausgelegt ist, umfasst. Der Wellenkörper ist aus einem Stahlwerkstoff hergestellt. Die Rotorwelle weist ferner eine Beschichtung auf, die an mindestens einem Teil einer Außenfläche des Wellenkörpers befestigt ist, wobei die Beschichtung ausgeführt ist, einen induzierten elektrischen Strom für die Drehbewegung des Wellenkörpers zu führen. Die Beschichtung ist aus einem Legierungsmaterial, wobei das Legierungsmaterial der Beschichtung und das Stahlmaterial des Wellenkörpers unterschiedliche Materialien sind.

Die Offenlegungsschrift DE 10 2012 006 248 A1 beschreibt einen Kurzschlussläufer und ein Herstellungsverfahren für diesen, wobei der Rotor Leiter mit hinreichender Stärke aufweist. In der Erfindung werden Leiterpartikel auf einem Kern und/oder leitfähige Stangen in einem Festkörperzustand gespritzt. Im Ergebnis wird in dem Deckschichtmaterial die Vergrößerung des Kristallkorns der Leiter deutlich beschränkt, wodurch leitfähige Endringe mit dem Kern und/oder den leitfähigen Stangen verbunden werden.

Die Offenlegungsschrift DE 10 2009 053987 A1 beschreibt ein Verfahren zur Herstellung einer kompakten und/oder massiven mehrlagigen Spule. Mittels Kaltgassprühens (Dynamic Cold Spraying) werden elektrisch leitende Verbindungen zwischen den im Trägermaterial eingebetteten einzelnen Leiterlagen, insbesondere zwischen den einzelnen Leiterbahnen, geschaffen.

Die Offenlegungsschrift WO 2016/017256 A1 beschreibt einen Induktionsmotor, der einen Rotor mit Stromschienen aufweist, die in Schlitzen eines massiven Eisenkerns enthalten sind. Die Schlitze sind offene Schlitze und haben eine Breite, die sich von der Außenumfangsseite zur Innenseite des Rotors hin allmählich und linear verjüngt.

Die Offenlegungsschrift EP 0 264 110 A1 beschreibt eine elektromagnetische Anordnung, insbesondere eine elektromagnetische Wicklung mit voneinander elektrisch isolierten Stromleiter-Windungen, welche gegeneinander elektrisch isoliert sind und die Form einer elektrisch leitfähigen Folie aufweisen. Die Folie kann eine Metallbeschichtung auf einer elektrisch isolierten Kunststofffolie sein oder aus elektrisch leitfähigem Kunststoff mit einer Isolationsschicht zwischen den einzelnen Windungen der Wicklung bestehen.

Aus der JP2014108006A ist ein Rotor mit einem Kurzschlusskäfig bekannt, welcher Schlitze für Leiter des Kurzschlusskäfigs aufweist, wobei zur Ausbildung der Leiter gedrucktes Metallpulver verwendet wird.

Aus der EP 0264110 A1 ist eine elektromagnetische Anordnung, insbesondere eine elektromagnetische Wicklung mit voneinander elektrisch isolierten Stromleiter-Windungen, bekannt, welche gegeneinander elektrisch isoliert sind und die Form einer elektrisch leitfähigen Folie aufweisen.

Aus der DE 102005056823A1 ist ein Verfahren zur Herstellung einer magnetischen Einrichtung einer elektrischen Maschine bekannt, bei dem auf einem Magnetträger der magnetischen Einrichtung ein oder mehrere permanentmagnetische Bereiche durch Pulveraufbringung eines magnetischen Materials hergestellt werden.

Der Erfindung liegt die Aufgabe zugrunde, ein Verfahren zur Herstellung eines Rotors für eine elektrische rotierende Maschine anzugeben, welches, im Vergleich zum Stand der Technik, einfacher und kostengünstiger ist.

Diese Aufgabe wird erfindungsgemäß durch ein Verfahren zur Herstellung eines Rotors für eine elektrische rotierende Maschine mit mindestens einem Wellenkörper und einem Kurzschlusskäfig gemäß des Anspruchs 1 gelöst, wobei eine Beschichtung aus zumindest einem ersten metallischen Werkstoff und einem zweiten metallischen Werkstoff, welcher sich vom ersten metallischen Werkstoff unterscheidet, mittels eines thermischen Spritzverfahrens auf zumindest einen Teil einer im Wesentlichen zylindrischen Außenfläche des Wellenkörpers aufgesprüht wird, wobei durch die Beschichtung zumindest ein Teil des Kurzschlusskäfigs ausgebildet wird.

Ferner wird die Aufgabe erfindungsgemäß durch einen Rotor für eine elektrische rotierende Maschine gemäß des Anspruchs gelöst, welcher einen Kurzschlusskäfig aufweist und mit einem derartigen Verfahren hergestellt ist.

Darüber hinaus wird die Aufgabe erfindungsgemäß durch eine elektrische rotierende Maschine gemäß des Anspruchs 13 mit mindestens einem derartigen Rotor gelöst.

Die in Bezug auf das Verfahren nachstehend angeführten Vorteile und bevorzugten Ausgestaltungen lassen sich sinngemäß auf den Rotor und die elektrische rotierende Maschine übertragen.

Der Erfindung liegt die Überlegung zugrunde, die Herstellung eines Rotors für eine elektrische rotierende Maschine durch die Verwendung eines thermischen Spritzverfahrens zu optimieren. Thermische Spritzverfahren sind beispielsweise Lichtbogenspritzen, Plasmaspritzen oder Flammspritzen. Es werden unterschiedliche metallische Werkstoffe mit dem thermischen Spritzverfahrens auf eine im Wesentlichen zylindrische Außenfläche eines Wellenkörpers aufgesprüht, wobei eine dichte und fest haftende Beschichtung ausgebildet wird und wobei durch die Beschichtung zumindest ein Teil eines magnetpolerzeugenden Elements ausgebildet wird. Ein metallischer Werkstoff ist beispielsweise ein Metall oder eine Legierung mit jeweils hartmagnetischen, weichmagnetischen oder unmagnetischen Eigenschaften. Ein magnetpolerzeugendes Element ist beispielsweise ein Kurzschlusskäfig, ein Elektromagnet oder ein Permanentmagnet. Werden beide metallischen Werkstoffe auf den Wellenkörper aufgesprüht, wird eine Verzahnung zwischen den Werkstoffen durch Ausbildung einer stoffschlüssigen Verbindung verbessert, sodass das magnetpolerzeugende Element, beispielsweise gegen im Betrieb auftretende Fliehkräfte, gesichert ist. Insbesondere im Vergleich zum Heiß Isostatischen Pressen wird durch das thermische Spritzverfahren die Anzahl der Arbeitsschritte erheblich reduziert, was zu einer Vereinfachung des Herstellungsverfahrens führt und die Fertigungskosten reduziert.

Besonders vorteilhaft wird als thermisches Spritzverfahren Kaltgasspritzen verwendet. Beim Kaltgasspritzen treffen über einen Gasstrom beschleunigte Festkörperpartikel mit derartig hoher kinetischer Energie auf dem Wellenkörper auf, dass über Diffusionsmechanismen eine stoffschlüssige Verbindung entsteht. Mit Hilfe von Kaltgasspritzen sind, im Vergleich zu anderen additiven Fertigungsverfahren, dicke Schichten, beispielsweise im Millimeterbereich und im Zentimeterbereich, in kurzer Zeit und geometrisch sehr flexibel herstellbar. Da das mittels Kaltgasspritzen aufgetragene Material nicht geschmolzen sondern durch seine kinetische Energie verformt wird, werden thermisch induzierte Spannungen, insbesondere im Bereich der Verbindung, weitestgehend vermieden.

In einer bevorzugten Ausführungsform ist der zweite metallische Werkstoff ein weichmagnetischer Werkstoff. Weichmagnetische Werkstoffe sind beispielsweise Eisen oder Stahl, die dafür geeignet einen magnetischen Fluss im Werkstoffinneren zu führen. Wird der weichmagnetische Werkstoff zusammen mit dem ersten metallischen Werkstoff aufgesprüht, ist die Bearbeitung des Wellenkörpers einfacher, da beispielsweise keine Nuten gefräst werden müssen. Ferner wird eine Verzahnung zwischen den Werkstoffen durch Ausbildung einer stoffschlüssigen Verbindung verbessert, sodass das magnetpolerzeugende Element, beispielsweise gegen im Betrieb auftretende Fliehkräfte, gesichert ist.

Bei einer bevorzugten Ausgestaltung ist der Wellenkörper aus dem zweiten metallischen Werkstoff hergestellt. Insbesondere wenn der zweite metallische Werkstoff ein weichmagnetischer Werkstoff ist, werden die elektrischen Eigenschaften des Rotors verbessert und eine Simulation des elektrischen Verhaltens wird vereinfacht. Durch eine Reduzierung der Anzahl der Werkstoffe wird eine Kostenreduzierung erreicht.

In einer weiteren vorteilhaften Ausgestaltung wird durch den ersten metallischen Werkstoff zumindest ein Teil eines Kurzschlusskäfigs ausgebildet. Beispielsweise werden Stäbe eines Kurzschlusskäfigs aus einem ersten metallischen Werkstoff gebildet welcher zusammen mit dem zweiten metallischen Werkstoff auf den Wellenkörper aufgesprüht wird, wobei Kurzschlussringe mit den Kurzschlussstäben an deren axialen Enden verbunden werden. Ein derartiger Kurzschlusskäfig ist leicht und kostengünstig herzustellen.

In einer bevorzugten Ausführungsform wird der Kurzschlusskäfig vollständig in den Rotor eingebettet. Insbesondere werden sowohl Kurzschlussringe mit den Kurzschlussstäben aus einem ersten metallischen Werkstoff zusammen mit dem zweiten metallischen Werkstoff auf den Wellenkörper aufgesprüht, sodass der Kurzschlusskäfig vollständig stoffschlüssig verbunden ist, sodass dieser, beispielsweise gegen im Betrieb auftretende Fliehkräfte, gesichert ist.

Bei einer weiteren vorteilhaften Ausgestaltung weist der erste metallische Werkstoff eine Leitfähigkeit von mehr als 40 MS/m auf. Beispielsweise weist der erste metallische Werkstoff Kupfer und/oder Silber auf. Durch eine derartig hohe Leitfähigkeit werden elektrische Verluste im Rotor reduziert. Da weniger Abwärme entsteht, ist der Rotor einfach und kostengünstig kühlbar.

Besonders vorteilhaft werden der erste metallische Werkstoff mit einer ersten Sprühvorrichtung und der zweite metallische Werkstoff mit einer zweiten Sprühvorrichtung aufgesprüht. Beispielsweise werden die Werkstoffe mit jeweils fertigungstechnisch optimierten Parametern, wie Düsendurchmesser, Partikelgröße, Druck und/oder Temperatur, aufgesprüht, was zu einer Verbesserung der elektrischen und mechanischen Eigenschaften des Rotors führt. Durch die Verwendung von verschiedenen Sprühvorrichtungen wird die Fertigungszeit reduziert.

Erfindungsgemäß werden die metallischen Werkstoffe rollierend auf die im Wesentlichen zylindrische Außenfläche des Wellenkörpers aufgesprüht. Rollierendes Aufsprühen bedeutet, dass der Wellenkörper um seine Rotationsachse gedreht wird, während die Sprühvorrichtung parallel zur Rotationsachse bewegt wird. Da die Sprühvorrichtung nicht in Umgangsrichtung bewegt wird, wird gewährleistet, dass die Sprühpartikel unter einem konstanten Winkel auf die Außenfläche des Wellenkörpers treffen. Ferner ist das rollierende Aufsprühen nicht nur präzise sondern zeiteffizient, da die sich starr in Axialrichtung bewegende Sprühvorrichtung zumindest selten neu auszurichten ist.

Besonders vorteilhaft erfolgt das rollierende Aufsprühen der metallischen Werkstoffe alternierend und/oder auf einer Evolventenbahn. Alternierend rollierendes Aufsprühen bedeutet, dass der Wellenkörper, während die Sprühvorrichtungen in Axialrichtung bewegt und dabei die Festkörperpartikel aufgesprüht werden, still steht. Danach wird der Wellenkörper um einen kleinen Schrittwinkel gedreht, während der Sprühvorgang unterbrochen wird. Daraufhin werden die Festkörperpartikel erneut, während der Wellenkörper still steht, in einer unmittelbar benachbarten und parallel zur Rotationsachse verlaufenden Bahn aufgetragen. Alternierend rollierendes Aufsprühen ist einfach zu realisieren. Rollierendes Aufsprühen auf einer Evolventenbahn bedeutet, dass der Wellenkörper, im Gegensatz zum alternierenden Aufsprühen, während die Sprühvorrichtungen in Axialrichtung bewegt und dabei die Festkörperpartikel aufgesprüht werden, sich ebenfalls bewegt. Rollierendes Aufsprühen auf einer Evolventenbahn beschleunigt das Fertigungsverfahren. Eine Nutschrägung, beispielsweise bei einem Käfigläufer, ist einfach realisierbar.

In einer weiteren vorteilhaften Ausgestaltung wird ein dritter Werkstoff derartig aufgesprüht, dass die metallischen Werkstoffe voneinander isoliert angeordnet werden. Beispielsweise ist ein Rotor mit einem Elektromagneten, welcher Erregerwicklungen aufweist, mit einem thermischen Spritzverfahren herstellbar. Ein derartiges Verfahren ist, beispielsweise hinsichtlich der Anzahl der Pole, der Leiterquerschnitte und der Wicklungszahl, flexibel und durch eine Reduzierung der Anzahl von Verfahrensschritten einfach.

Erfindungsgemäß werden zumindest zwei Werkstoffe der Beschichtung formschlüssig verbunden. Eine derartige formschlüssige Verbindung ist beispielsweise über eine, insbesondere sägezahnförmige, Rippenstruktur herstellbar. Durch einen Formschluss wird der Rotor zusätzlich stabilisiert.

Im Folgenden wird die Erfindung anhand der in den Figuren dargestellten Ausführungsbeispiele näher beschrieben und erläutert.

Es zeigen:
FIG 1 einen Längsschnitt einer elektrischen rotierenden Maschine,
FIG 2 eine Seitenansicht eines Rotors mit einem Kurzschlusskäfig,
FIG 3 einen Querschnitt einer nicht beanspruchten Ausführungsform eines Rotors mit einer Beschichtung,
FIG 4 einen Querschnitt einer weiteren nicht beanspruchten Ausführungsform eines Rotors mit einer Beschichtung,
FIG 5 einen vergrößerten Querschnitt einer erfindungsgemäßen Ausführungsform eines Rotors mit einer Beschichtung,
FIG 6 einen vergrößerten Querschnitt einer weiteren nicht beanspruchten Ausführungsform eines Rotors mit einer Beschichtung,
FIG 7 eine schematische Darstellung eines erfindungsgemäßen Verfahrens zur Herstellung eines Rotors und
FIG 8 eine schematische Darstellung eines weiteren erfindungsgemäßen Verfahrens zur Herstellung eines Rotors.

Bei den im Folgenden erläuterten Ausführungsbeispielen handelt es sich sowohl um erfindungsgemäße Ausführungsformen, als auch um beispielhafte Ausführungsformen, die nicht durch die Ansprüche gedeckt sind.

Bei den erfindungsgemäßen Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

Gleiche Bezugszeichen haben in den verschiedenen Figuren die gleiche Bedeutung.

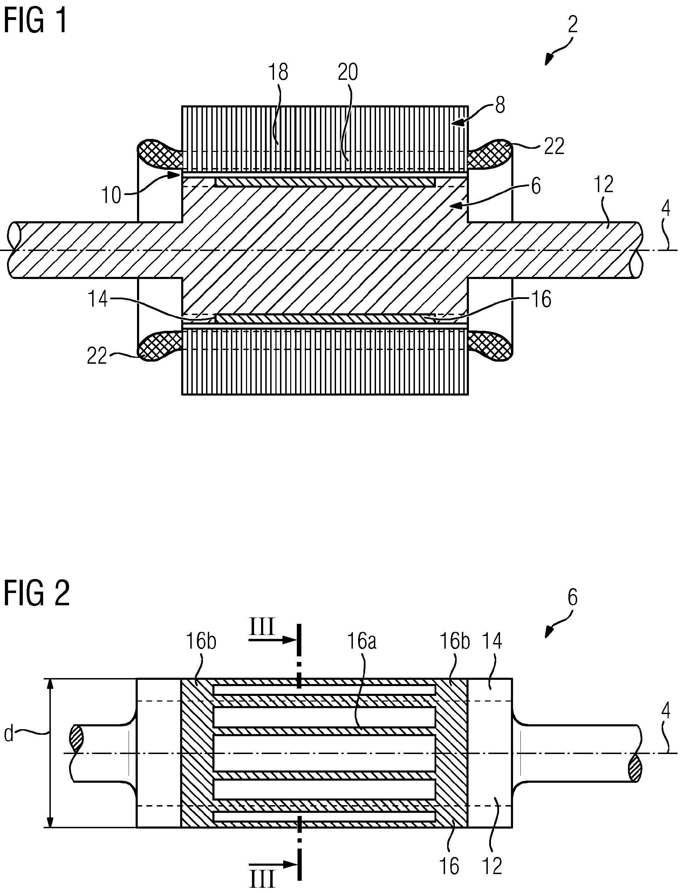

FIG 1 zeigt einen Längsschnitt einer beispielhaften elektrischen rotierenden Maschine 2, welche als Asynchronmaschine ausgeführt ist. Die Asynchronmaschine weist einen um eine Rotationsachse 4 rotierbaren Rotor 6 und einen den Rotor 6 umgebenden Stator 8 auf. Zwischen dem Rotor 6 und dem Stator 8 befindet sich ein Spalt 10, der insbesondere als Luftspalt ausgeführt ist. Die Rotationsachse 4 definiert eine Axialrichtung, eine Radialrichtung und eine Umfangsrichtung. Der Rotor 6 umfasst einen massiven Wellenkörper 12 mit einer Beschichtung 14, die ein magnetpolerzeugendes Element aufweist. Das magnetpolerzeugende Element ist als Kurzschlusskäfig 16 ausgeführt. Alternativ ist die elektrische rotierende Maschine 2 als Synchronmaschine ausgeführt, wobei der Rotor 6 der Synchronmaschine als magnetpolerzeugendes Element Permanentmagnete oder Pole mit Erregerwicklungen aufweist. Der Stator 8 umfasst ein magnetfeldführendes Statorelement 18, welches zur Unterdrückung von Wirbelströmen als Blechpaket ausgeführt ist, und eine Statorwicklung 20, welche an den axialen Enden des Statorblechpakets Wickelköpfe 22 ausbildet.

FIG 2 zeigt eine Seitenansicht eines beispielhaften Rotors 6 mit einem Kurzschlusskäfig 16. Der Kurzschlusskäfig 16 weist Kurzschlussstäbe 16a auf, welche an ihren axialen Enden über jeweils einen Kurzschlussring 16b verbunden sind. Die Beschichtung 14 ist mit einem thermischen Spritzverfahren aufgetragen und so ausgestaltet, dass der Rotor 6 im Wesentlichen zylinderförmig ausgestaltet und der Kurzschlusskäfig 16 vollständig in die Beschichtung 14 des Rotors 6 eingebettet ist. Thermische Spritzverfahren sind beispielsweise Lichtbogenspritzen, Plasmaspritzen, Flammspritzen oder Kaltgasspritzen. Der massive Wellenkörper 12 ist aus einem weichmagnetischen Werkstoff hergestellt. Die Beschichtung 14 umfasst einen ersten metallische Werkstoff und einen zweiten metallischen Werkstoff, wobei der zweite metallische Werkstoff ein weichmagnetischer Werkstoff ist und im Wesentlichen dem weichmagnetischen Werkstoff des Wellenkörpers 12 entspricht. Der erste metallische Werkstoff des Kurzschlusskäfigs 16, beispielsweise Kupfer oder eine Kupferlegierung, weist eine Leitfähigkeit von mehr als 40 MS/m auf. Ferner ist die Beschichtung 14, welche den Kurzschlusskäfig 16 umfasst, mit dem Wellenkörper 12 durch das thermische Spritzverfahren zumindest stoffschlüssig verbunden, sodass der Rotor 6, welcher einen Durchmesser d von mindestens 30 cm aufweist, mit einer Leistung von mindestens 1 MW und einer Drehzahl von mindestens 10.000 U/min betreibbar ist. Beispielsweise beim Kaltgasspritzen treffen über einen Gasstrom beschleunigte Festkörperpartikel mit derartig hoher kinetischer Energie auf dem Wellenkörper 12 auf, dass über Diffusionsmechanismen eine stoffschlüssige Verbindung entsteht. Die weitere Ausgestaltung des Rotors 6 in FIG 2 entspricht der in FIG 1.

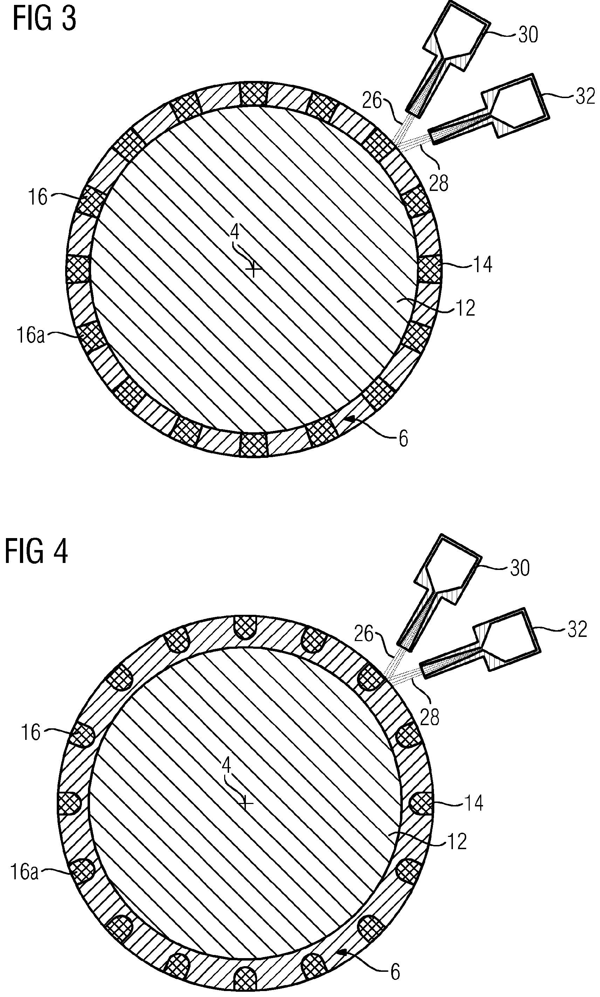

FIG 3 zeigt einen Querschnitt einer nicht beanspruchten Ausführungsform eines Rotors 6 mit einer Beschichtung 14. Die Beschichtung 14 umfasst metallische Festkörperpartikel, welche mittels Kaltgasspritzen auf die im Wesentlichen zylindrische Außenfläche 24 des Wellenkörpers 12 aufgesprüht werden. Die Beschichtung umfasst Festkörperpartikel aus einem ersten metallischen Werkstoff 26 und Festkörperpartikel aus einen zweiten metallischen Werkstoff 28, wobei der erste metallischen Werkstoff 26 mit einer ersten Sprühvorrichtung 30 und der zweite metallische Werkstoff 28 mit einer zweiten Sprühvorrichtung 32 direkt auf die im Wesentlichen zylindrische Außenfläche 24 des Wellenkörpers 12 aufgesprüht werden. Der Kurzschlusskäfig 16 wird, wie in FIG 2, aus Festkörperpartikeln des ersten metallischen Werkstoffs 28 gebildet. Der zweite metallische Werkstoff 28 ist, wie in FIG 2, ein weichmagnetischer Werkstoff, beispielsweise Stahl, und entspricht im Wesentlichen dem weichmagnetischen Werkstoff des Wellenkörpers 12. Der Kurzschlusskäfig 16 ist vollständig in den Rotor 6 eingebettet. Zumindest die Kurzschlussstäbe 16a des Kurzschlusskäfigs 16 weisen im Querschnitt eine kreisringsektorförmige Kontur auf. Näherungsweise ist die Kontur rechteckig oder quadratisch. Durch eine derartige rechteckige oder quadratische Kontur der Leiter des Kurzschlusskäfigs 16 wird eine hohe Stromtragfähigkeit erzielt. Die weitere Ausgestaltung des Rotors 6 in FIG 3 entspricht der in FIG 2.

FIG 4 zeigt einen Querschnitt einer weiteren nicht beanspruchten Ausführungsform eines Rotors 6 mit einer Beschichtung 14, wobei zumindest die Kurzschlussstäbe 16a des Kurzschlusskäfigs 16 im Querschnitt eine abgerundete Kontur aufweisen. Beispielhaft ist die Kontur der Kurzschlussstäbe 16a U-förmig dargestellt. Der Kurzschlusskäfig 16 ist vollständig in die Beschichtung 14 des Rotors 6 eingebettet. Die weitere Ausgestaltung des Rotors 6 in FIG 4 entspricht der in FIG 3.

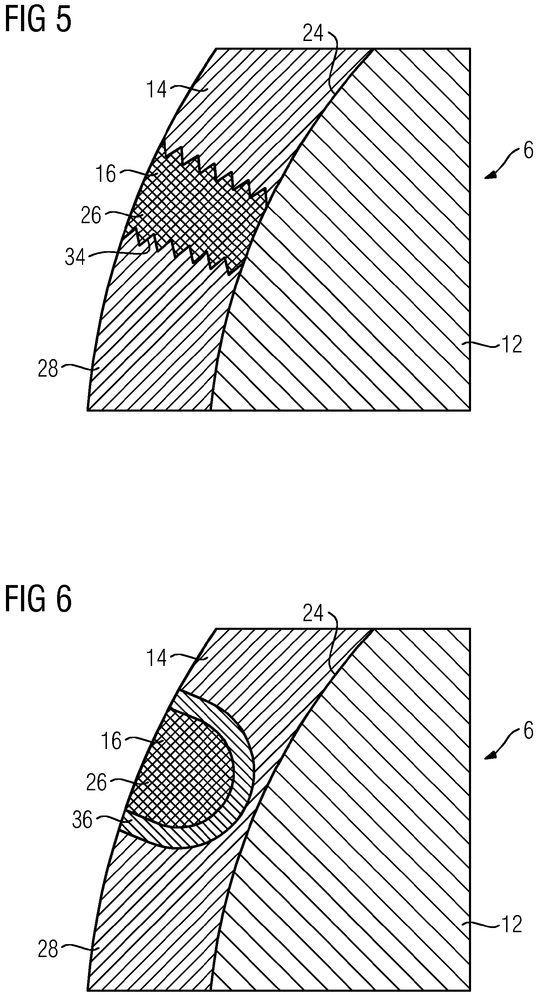

FIG 5 zeigt einen vergrößerten Querschnitt einer erfindungsgemäßen Ausführungsform eines Rotors 6 mit einer Beschichtung 14, wobei der erste Werkstoff 26 und der zweite Werkstoff 26 durch eine, beispielhaft sägezahnförmige, Rippenstruktur 34 zusätzlich formschlüssig verbunden sind. Der Kurzschlusskäfig 16 ist vollständig in die Beschichtung 14 des Rotors 6 eingebettet. Die weitere Ausgestaltung des Rotors 6 in FIG 5 entspricht der in FIG 3.

FIG 6 zeigt einen vergrößerten Querschnitt einer weiteren nicht beanspruchten Ausführungsform eines Rotors 6 mit einer Beschichtung 14. Die Beschichtung umfasst Festkörperpartikel aus einem ersten metallischen Werkstoff 26, aus einen zweiten metallischen Werkstoff 28 und aus einem dritten Werkstoff 36. Die Werkstoffe 26, 28, 36 werden mittels unterschiedlicher Sprühvorrichtung 30, 32 auf die im Wesentlichen zylindrische Außenfläche 24 des Wellenkörpers 12 aufgesprüht. Die Sprühvorrichtungen 30, 32 sind aus Gründen der Übersichtlichkeit in FIG 6 nicht dargestellt.

Der dritte Werkstoff 36 ist ein elektrisch leitfähiger Werkstoff, der beispielsweise Silber, Messing, Zink oder Aluminium aufweist und sich durch seine elektrischen, thermischen und/oder mechanischen Eigenschaften vom ersten metallischen Werkstoff 26 unterscheidet. Durch einen elektrisch leitfähigen dritten Werkstoff 36 wird beispielsweise eine mechanische Stabilität des Rotors 6 verbessert und/oder die im Betrieb auftretenden Verluste verringert Der dritte Werkstoff 36 ist dem Kurzschlusskäfig 16 zugeordnet und verbindet den ersten metallischen Werkstoff 26 mit dem zweiten metallischen Werkstoff 28. Alternativ ist der dritte Werkstoff 36 ein elektrischer isolierender Werkstoff, der beispielsweise Aluminiumoxid aufweist und den ersten metallischen Werkstoff 26 vom zweiten metallischen Werkstoff 28 isoliert. Die weitere Ausgestaltung des Rotors 6 in FIG 6 entspricht der in FIG 4.

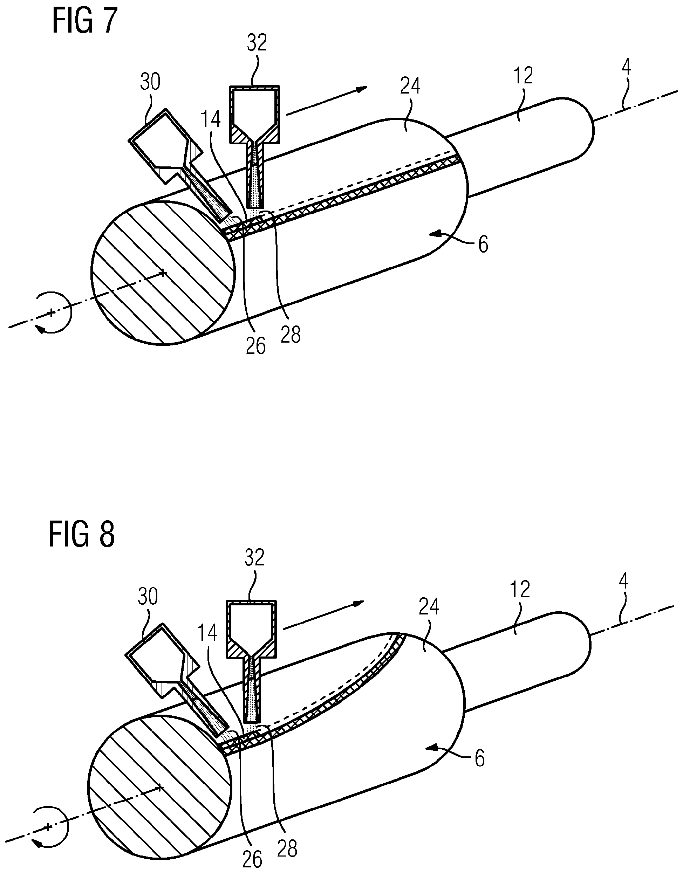

FIG 7 zeigt eine schematische Darstellung eines erfindungsgemäßen Verfahrens zur Herstellung eines Rotors 6. Die Beschichtung 14 des Rotors 6 wird mittels Kaltgasspritzen von beispielhaft zwei Sprühvorrichtungen 30, 32 auf die im Wesentlichen zylindrische Außenfläche 24 des Wellenkörpers 12 aufgesprüht, wobei die Sprühvorrichtungen axial hintereinander und/oder in Umfangsrichtung nebeneinander angeordnet sind.

Die Sprühvorrichtungen 30, 32 werden zeitgleich oder abwechselnd betrieben. Die metallischen Werkstoffe 26, 28 der Beschichtung 14 werden erfindungsgemäß rollierend auf den Wellenkörpers 12 aufgesprüht, was bedeutet, dass der Wellenkörper 12 um seine Rotationsachse 4 gedreht wird, während die Sprühvorrichtungen 30, 32 parallel zur Rotationsachse 4 bewegt werden. Da die Sprühvorrichtungen 30, 32 nicht in Umgangsrichtung bewegt werden, wird gewährleistet, dass die Festkörperpartikel unter einem konstanten Winkel von 80° bis 110° auf die Außenfläche 24 des Wellenkörpers 12 treffen.

Das rollierende Aufsprühen der metallischen Werkstoffe 26, 28 erfolgt alternierend, was bedeutet, dass der Wellenkörper 12, während die Sprühvorrichtungen 30, 32 in Axialrichtung bewegt und dabei die Festkörperpartikel aufgesprüht werden, still steht. Danach wird der Wellenkörper 12 um einen kleinen Schrittwinkel gedreht, während der Sprühvorgang unterbrochen wird. Daraufhin werden die Festkörperpartikel erneut, während der Wellenkörper 12 still steht, in einer unmittelbar benachbarten und parallel zur Rotationsachse verlaufenden Bahn aufgetragen. Die weitere Ausgestaltung des Rotors 6 in FIG 7 entspricht erfindungsgemäß der in FIG. 5

FIG 8 zeigt eine schematische Darstellung eines weiteren erfinduungsgemäßen Verfahrens zur Herstellung eines Rotors 6. Das rollierende Aufsprühen der metallischen Werkstoffe 26, 28 erfolgt auf einer Evolventenbahn, was bedeutet, dass der Wellenkörper 12, im Gegensatz zum alternierenden Aufsprühen, während die Sprühvorrichtungen 30, 32 in Axialrichtung bewegt und dabei die Festkörperpartikel aufgesprüht werden, sich ebenfalls bewegt. Um reproduzierbare Ergebnisse zu erzielen, müssen die Bewegungen der Sprühvorrichtungen 30, 32 und die Rotationsbewegung des Wellenkörpers 12 synchronisiert sein. Die weitere Ausgestaltung des Rotors 6 in FIG 8 entspricht erfindungsgemäß der in FIG. 5. Zusammenfassend betrifft die Erfindung ein Verfahren zur Herstellung eines Rotors 6 für eine elektrische rotierende Maschine 2 gemäß des unabhängigen Anspruchs 1.

## Patentansprüche

1. Verfahren zur Herstellung eines Rotors (6) für eine elektrische rotierende Maschine (2) mit mindestens einem Wellenkörper (12) und einem Kurzschlusskäfig (16),
wobei eine Beschichtung (14) aus zumindest einem ersten metallischen Werkstoff (26) und einem zweiten metallischen Werkstoff (28), welcher sich vom ersten metallischen Werkstoff (26) unterscheidet, mittels eines thermischen Spritzverfahrens auf zumindest einen Teil einer im Wesentlichen zylindrischen Außenfläche (24) des Wellenkörpers (12) aufgesprüht wird,
wobei durch die Beschichtung (14) zumindest ein Teil des Kurzschlusskäfigs (16) ausgebildet wird,
**dadurch gekennzeichnet, dass** die metallischen Werkstoffe (26, 28) rollierend auf die im Wesentlichen zylindrische Außenfläche (24) des Wellenkörpers (12) aufgesprüht werden
wobei zumindest zwei Werkstoffe (26, 28) der Beschichtung (14) formschlüssig verbunden werden.

2. Verfahren nach Anspruch 1,
wobei als thermisches Spritzverfahren Kaltgasspritzen verwendet wird.

3. Verfahren nach einem der Ansprüche 1 oder 2,
wobei der zweite metallische Werkstoff (28) ein weichmagnetischer Werkstoff ist.

4. Verfahren nach einem der Ansprüche 1 bis 3,
wobei der Wellenkörper (12) aus dem zweiten metallischen Werkstoff (28) hergestellt ist.

5. Verfahren nach einem der vorherigen Ansprüche,
wobei durch den ersten metallischen Werkstoff (26) zumindest ein Teil eines Kurzschlusskäfigs (16) ausgebildet wird.

6. Verfahren nach Anspruch 5,
wobei der Kurzschlusskäfig (16) vollständig in den Rotor (6) eingebettet wird.

7. Verfahren nach einem der vorherigen Ansprüche,
wobei der erste metallische Werkstoff (26) eine Leitfähigkeit von mehr als 40 MS/m aufweist.

8. Verfahren nach einem der vorherigen Ansprüche,
wobei der erste metallische Werkstoff (26) mit einer ersten Sprühvorrichtung (30) und der zweite metallische Werkstoff (28) mit einer zweiten Sprühvorrichtung (32) aufgesprüht werden.

9. Verfahren nach Anspruch 1,
wobei das rollierende Aufsprühen der metallischen Werkstoffe (26, 28) alternierend und/oder auf einer Evolventenbahn erfolgt.

10. Verfahren nach einem der vorherigen Ansprüche,
wobei ein dritter Werkstoff (36) derartig aufgesprüht wird, dass die metallischen Werkstoffe (26, 28) voneinander isoliert angeordnet werden.

11. Rotor (6) für eine elektrische rotierende Maschine (2) mit einem Kurzschlusskäfig (16), welcher mit einem Verfahren nach einem der vorherigen Ansprüche hergestellt ist, wobei eine Beschichtung (14) aus zumindest einem ersten metallischen Werkstoff (26) und einem zweiten metallischen Werkstoff (28), welcher sich vom ersten metallischen Werkstoff (26) unterscheidet, mittels eines thermischen Spritzverfahrens auf zumindest einen Teil einer im Wesentlichen zylindrischen Außenfläche (24) eines Wellenkörpers (12) aufgesprüht ist, wobei durch die Beschichtung (14) zumindest ein Teil eines Kurzschlusskäfigs (16) ausgebildet ist, wobei die metallischen Werkstoffe (26, 28) rollierend auf die im Wesentlichen zylindrische Außenfläche (24) des Wellenkörpers (12) aufgesprüht sind, wobei zumindest zwei Werkstoffe (26, 28) der Beschichtung (14) formschlüssig verbunden werden.

12. Rotor (6) nach Anspruch 11,
wobei der Rotor (6) mit einer Drehzahl von mindestens 5.000 U/min betreibbar ist.

13. Elektrische rotierende Maschine (2) mit mindestens einem Rotor (6) nach einem der Ansprüche 11 oder 12.

## Claims

1. Method of producing a rotor (6) for an electric rotating machine (2) having at least a shaft body (12) and a squirrel cage (16),
where a coating (14) composed of at least one first metallic material (26) and a second metallic material (28) different from the first metallic material (26) is sprayed by a thermal spraying method onto at least part of an essentially cylindrical outer surface (24) of the shaft body (12),
where the coating (14) forms at least a part of the squirrel cage (16),
**characterized in that** the metallic materials (26, 28) are sprayed onto the essentially cylindrical outer surface (24) of the shaft body (12) in a rolling manner,
where at least two materials (26, 28) of the coating (14) are positively joined.

2. Method according to Claim 1,
wherein the thermal spraying method used is cold gas spraying.

3. Method according to either of Claims 1 and 2,
wherein the second metallic material (28) is a soft-magnetic material.

4. Method according to any of Claims 1 to 3,
wherein the shaft body (12) is made from the second metallic material (28).

5. Method according to any of the preceding claims,
wherein the first metallic material (26) forms at least part of a squirrel cage (16).

6. Method according to Claim 5,
wherein the squirrel cage (16) is fully embedded in the rotor (6).

7. Method according to any of the preceding claims,
wherein the first metallic material (26) has a conductivity of more than 40 MS/m.

8. Method according to any of the preceding claims,
wherein the first metallic material (26) is sprayed on with a first spraying device (30) and the second metallic material (28) with a second spraying device (32).

9. Method according to Claim 1,
wherein the rolling spray application of the metallic materials (26, 28) is effected alternately and/or along an involute path.

10. Method according to any of the preceding claims,
wherein a third material (36) is sprayed on in such a way that the metallic materials (26, 28) are in a mutually isolated arrangement.

11. Rotor (6) for an electric rotating machine (2) having a squirrel cage (16), produced by a method according to any of the preceding claims, wherein a coating (14) composed of at least one first metallic material (26) and a second metallic material (28) different from the first metallic material (26) is sprayed by a thermal spraying method onto at least part of an essentially cylindrical outer surface (24) of a shaft body (12), wherein the coating (14) forms at least a part of a squirrel cage (16), wherein the metallic materials (26, 28) are sprayed onto the essentially cylindrical outer surface (24) of the shaft body (12) in a rolling manner, wherein at least two materials (26, 28) of the coating (14) are positively joined.

12. Rotor (6) according to Claim 11,
wherein the rotor (6) is operable at a speed of at least 5000 rpm.

13. Electric rotating machine (2) having at least one rotor (6) according to either of Claims 11 and 12.

## Revendications

1. Procédé de fabrication d'un rotor (6) pour une machine tournante électrique (2) avec au moins un corps d'arbre (12) et une cage en court-circuit (16),
un revêtement (14) composé d'au moins un premier matériau métallique (26) et d'un deuxième matériau métallique (28), qui se distingue du premier matériau métallique (26), étant projeté sur au moins une partie d'une surface extérieure (24) sensiblement cylindrique du corps d'arbre (12) au moyen d'un procédé d'injection thermique,
au moins une partie de la cage en court-circuit (16) étant formée par le revêtement (14),
**caractérisé en ce que** les matériaux métalliques (26, 28) sont projetés par roulage sur la surface extérieure (24) sensiblement cylindrique du corps d'arbre (12),
au moins deux matériaux (26, 28) du revêtement (14) étant reliés par complémentarité de forme.

2. Procédé selon la revendication 1,
une injection de gaz froid étant utilisée en tant que procédé d'injection thermique.

3. Procédé selon l'une des revendications 1 ou 2,
le deuxième matériau métallique (28) étant un matériau magnétique doux.

4. Procédé selon l'une des revendications 1 à 3,
le corps d'arbre (12) étant fabriqué à partir du deuxième matériau métallique (28).

5. Procédé selon l'une des revendications précédentes, au moins une partie d'une cage en court-circuit (16) étant formée par le premier matériau métallique (26).

6. Procédé selon la revendication 5,
la cage en court-circuit (16) étant totalement intégrée dans le rotor (6).

7. Procédé selon l'une des revendications précédentes, le premier matériau métallique (26) présentant une conductivité supérieure à 40 MS/m.

8. Procédé selon l'une des revendications précédentes, le premier matériau métallique (26) étant projeté avec un premier dispositif de projection (30) et le deuxième matériau métallique (28) étant projeté avec un deuxième dispositif de projection (32).

9. Procédé selon la revendication 1,
la projection par roulage des matériaux métalliques (26, 28) étant effectuée en alternance et/ou sur une voie en développante.

10. Procédé selon l'une des revendications précédentes, un troisième matériau (36) étant projeté de telle manière que les matériaux métalliques (26, 28) sont disposés de manière isolée les uns des autres.

11. Rotor (6) pour une machine tournante électrique (2) avec une cage en court-circuit (16), laquelle est fabriquée avec un procédé selon l'une des revendications précédentes, un revêtement (14) composé d'au moins un premier matériau métallique (26) et d'un deuxième matériau métallique (28), qui se distingue du premier matériau métallique (26), étant projeté sur au moins une partie d'une surface extérieure (24) sensiblement cylindrique d'un corps d'arbre (12) au moyen d'un procédé d'injection thermique, au moins une partie d'une cage en court-circuit (16) étant formée par le revêtement (14), les matériaux métalliques (26, 28) étant projetés par roulage sur la surface extérieure (24) sensiblement cylindrique du corps d'arbre (12), au moins deux matériaux (26, 28) du revêtement (14) étant reliés par complémentarité de forme.

12. Rotor (6) selon la revendication 11,
le rotor (6) pouvant fonctionner avec une vitesse de rotation d'au moins 5.000 t/min.

13. Machine tournante électrique (2) avec au moins un rotor (6) selon l'une des revendications 11 ou 12.
